Europäisches Patentamt

European Patent Office

Office européen des brevets

(19)

(11) EP 1 279 970 A2

(12) **EUROPEAN PATENT APPLICATION**

(43) Date of publication:
29.01.2003 Bulletin 2003/05

(51) Int Cl.7: **G01S 13/00**, G01S 5/14,
G01C 13/00, G01S 13/88

(21) Application number: 02012093.7

(22) Date of filing: 31.05.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.05.2001 US 295234 P**

(71) Applicant: **Starlab Barcelona SL
Barcelona (ES)**

(72) Inventors:
• **Caparrini, Marco
08024 Barcelona (ES)**

• **Germain, Olivier
08017 Barcelona (ES)**
• **Soulat, Francois
08003 Barcelona (ES)**
• **Ruffini, Leonardo
08017 Barcelona (ES)**
• **Ruffini, Giulio
08023 Barcelona (ES)**

(74) Representative: **von Hellfeld, Axel, Dr. Dipl.-Phys.
Wuesthoff & Wuesthoff
Patent- und Rechtsanwälte
Schweigerstrasse 2
81541 München (DE)**

(54) **A system for monitoring a feature of a surface with broad swath and high resolution**

(57) A system for monitoring at least one feature of a surface combining Delay Doppler Complex maps obtained from a Global Navigation Satellite System component (e.g. GNSS like Galileo, GPS, Glonass and Augmentation systems, including ground pseudo-lites, or future Earth-bound or planet/space-bound navigation/positioning/communication systems) or an other satellite system indirectly from one or more receivers and/or multiple emitters and/or several observations and/or frequencies and/or polarizations and means for deriving from said reflected signals said feature to be monitored.

Figure 1

General PARIS configuration, in schematic fashion. The basic system consists of two antennas connected to a single receiver.

## Description

### Technical Field to which the Invention relates

This invention relates to the field of Planetary Observation, including Earth Observation (EO), in particular Operational Oceanography (OO) and the Global

Ocean and Coastal Observation System.

This invention relates in particular to the field of monitoring at least one feature of a surface, in particular a surface on Earth, and especially for monitoring a feature of a water body, like an ocean, a sea, a lake, or a river.

It addresses the use of Global Navigation Satellite System (GNSS such as Galileo, GPS and Glonass or future, Earth-bound or not, navigation systems) signals for altimetry (of the oceans, rivers, or lakes), sea state, currents, pollution (oil spills) and salinity measurements from stationary or slow moving receiver systems. The system can also be used from airborne (aircraft, stratospheric platforms) platforms. Other sources of opportunity can be used. For instance, and although not discussed in detail, the use of natural sources (such as Quasars) as sources of opportunity is also envisioned.

Two Global Navigation Satellite System (GNSS) constellations are presently operational, the Global Positioning System (GPS), owned and operated by the United States, and the Russian GLObal NAvigation Satellite System (GLONASS). In the next few years, the European Satellite Navigation System (Galileo) will be deployed, with the launch of the first block of satellites scheduled for 2003 and operations in 2008. Other GNSS signals are available from the GNSS augmentation systems such as Immarsat. More than 50 GNSS satellites will be soon in orbit, emitting microwave signals with well-characterized complex signals (mostly in L band) for at least a few decades, providing a very powerful infrastructure for EO and OO. These freely available signals can be used for purposes other than navigation. It is expected that such systems will some day be operational in other planets as well.

In this patent we address the issues of resolution and swath from air and spaceborne receivers.

### Background art and assessment thereof

Regarding the general discussion and also regarding the disclosure of the invention, we explicitly refer to another patent application filed by the same applicant today in the European Patent Office, said application being entitled: A system for monitoring a feature of a surface; Applicant: Starlab Barcelona SL. We include that other patent application by reference into the present application, in particular with regard to the enablement of disclosure.

This invention rests partly on the PARIS invention ("PARIS Altimeter System", ESA patent to Neira, Colmenarejo, Ruffini). PARIS is a bistatic radar system for space applications in which only the receivers need to be deployed. The emitters, the so-called sources of opportunity can be the radio transmitters in GNSS components. GNSS (such as GPS and the forthcoming Galileo) systems are premium candidates for PARIS applications, given their coverage, potential resolution, long-term availability and signal characteristics (continuous wave spread spectrum signals). GNSS are based on the constancy of the speed of light and a relative measurement system and they are self-calibrating, so they are very stable and the measurements are highly repeatable. This is a fundamental aspect in this patent.

As to the prior art we refer to US patent 6,137,433 and US patent 5,546,087 (PARIS) and the prior art cited therein. In the following, it is assumed that the reader knows these two prior-art documents.

In the PARIS patent above, the main concept is the use of delay measurements from sources of opportunity for altimetry using a spaceborne receiver. The patent is focused on the use of code ranging, and no details are given on the use of carrier phase altimetry.

The PIP concept, subject of another patent (see reference below), refers to the use of a dual frequency system. The reflected fields from two nearby frequencies are combined at the receiver to synthesize a longer wavelength (wide-laning). Our work shows that this combination is less sensitive to surface roughness and motion, as it acts as with a longer wavelength. The combination of GPS L2 and L5, for instance, acts as wavelength of about 5 meters---which is much less sensitive to wave motion on the surface. This means that it will be easier for the receiver to track this interferometric phase---a lower bandwidth Phase Lock Loop can be employed. In what follows, we allow for the use of these types of combinations to compensate for moving surfaces. It is important, in this respect, that the Ionospheric and Tropospheric effects be compensated for using the dual frequency GNSS system capabilities, or other standard means to provide these corrections, using data from the up looking antenna.

An important point is that GNSS systems are premium candidates for multi-static radar applications, given their global and dense coverage, potential resolution, long-term availability and stability and signal characteristics (continuous wave spread spectrum signals). The American pioneering GNSS system, GPS, is presently undergoing some improvements (the addition of new civilian codes, new frequencies and increased power), and the European system, Galileo, will offer a wide variety of signals, adding even more to the possibilities.

In summary, PARIS is an instantiation of multi-static Radar in which reflected GNSS signals are preferably used to infer altimetric properties of the sea surface from space.

Wind measurements are claimed in US patent 6,137,433 using GPS reflected signals using Delay mapping for wind speed retrieval. We will discuss here also an extension of this idea using the full Delay Doppler maps from various GNSS (GPS and Galileo and others) reflections from airborne moving platforms, to infer directional mean square slopes of the surface (whatever surface), which can be related, using slope-wind models, to both wind speed and direction for ocean surface reflections. The techniques proposed in US patent 6,137,433 are of limited use from space, as they use all the power from the "glistening" surface (which is rather large as seen from space) to infer a wind solution. Thus, resolution and precision limit severely the applicability of the concept.

## Disclosure of the invention

In the following, the invention is primarily explained with regard to its implementation in determining a feature of a surface of a water body. The invention is applied to other surfaces in an analogous manner.

Here we propose using reflected signals (from sources such as GNSS, like GPS and Galileo or any of their augmentation components, such as WAAS, EGNOS and future pseudo-lite developments) from air/spaceborne applications to infer the sea, river, lake height or coastal sea level as well as the sea state and currents and salinity from a receiving system on moving platform, e.g., a an aircraft of spacecraft.

For the following we will focus the discussion mainly on GNSS systems (GPS and

Galileo), but the concepts can be extended to the use of other sources of opportunity.

This patent addresses, more specifically, a new use of GNSS Reflected data (but signals from other sources of opportunity, artificial or natural, are also considered). We propose to exploit the Delay and Doppler mapping capability inherent in any GNSS Reflections (or, in general, any radar system, both monostatic and multi-static) air or spaceborne system, to classify and use efficiently both altimetry and reflectometry/scatterometry data according to Delay and Doppler Mapping for high resolution and broad swath applications.

Delay Doppler complex **correlation** is the process of generating a signal similar to the one emitted by the transmitter (e.g., a replica of a signal emitted by a GNSS component, which have a standard format) but with a selected Delay and Doppler (i.e., as arriving later or earlier, and with a selected carrier Doppler), and then cross-correlating the generated signal with the received one. In some cases, one is interested in the peak of the correlation, which is found with a specific Delay and Doppler. The complex correlation peak gives a rather direct measure of the electric field averaged over the (normally short) coherence integration time. If a fully polarimetry system is available, the polarization of said field can also be obtained.

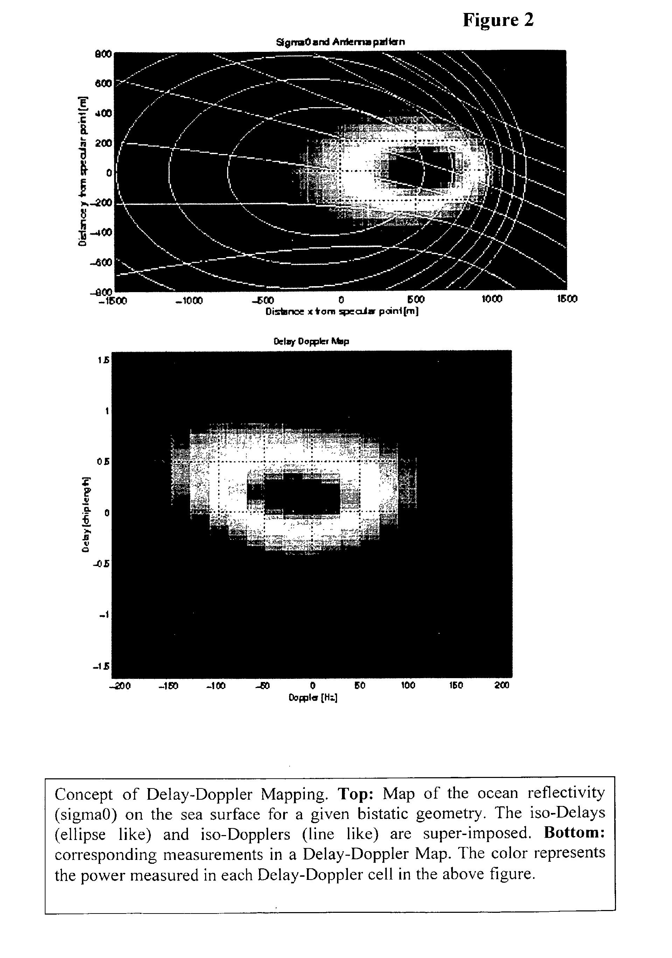

In reality, all the information available is contained in the space, time, and frequency referenced **Complex Delay Doppler Map** (see figure 2), which is a map from the ocean surface to the Complex Delay Doppler domain. Exploiting the phase of the Delay Doppler Map peak is the goal in standard altimetry. Exploiting the magnitude of the Delay Doppler map is the goal of reflectometry. Other possibilities are to use all the phase and magnitude information content (bistatic SAR), which we discuss.

In order to assess the usefulness of ocean-reflected GNSS signals, we must understand their characteristics. Once the reflected signal is correlated with a clean replica of the direct signal with the appropriate Doppler compensation, we can extract a measure of the power reflected from an ocean patch (a Delay-Doppler Mapping cell, or DDM cell). The correlation process filters the reflected field, and helps isolate the field contribution from a given DDM cell. The radar equation for the bistatic case in the GNSS reflections case needs to take into account that for a given delay and Doppler, the power comes from a sub-cell of the surface--the DDM cell mentioned above. The function of the Delay and Doppler parameters,

$$\chi \approx S(\delta f) \cdot \Delta(\tau)$$

(the Woodward Ambiguity Function or WAF), thorough its support, selects a given portion of the surface from which power is measured.

The support in the area integration is just provided by the modulus of the WAF squared:

$$P(\tau, f) = \int dA \, \frac{G_t G_r}{R_t^2 R_r^2} \cdot \sigma^0 \cdot |\chi|^2,$$

The support in the integrand is the intersection of four spatial zones: 1) The receiver antenna footprint (we are assuming large incident beam-width), 2) the annulus zone defined by the $A^2$ function, 3) the Doppler zone defined by the function and 4) the scattering cross section coefficient $\sigma^0$. This equation is the basis for Delay-Doppler mapping (DDM). The other terms R are distances.

The scattered signal carries information from the 2D scattering surface that can be parametrized in terms of Delay with respect to un-reflected (direct) signal and Doppler shift. Using this type of information (the power scattered as a function of the scattering location in the glistening surface) and using an appropriate model, information about sea surface statistics can be extracted from reflected data.

Thus, a key concept is that in some cases, of especial relevance here, one may want to obtain correlations with Delays and Dopplers other than that of the maximum correlation, to generate **Complex Delay Doppler maps.** A 3D **Delay Doppler "cube"** can be formed combining said Delay Doppler maps from different times.

Delay Doppler mapping is an intrinsic property of any radar system, active or passive, monostatic or multistatic. The data received by such a system can be geo-referenced using this information (since different points on the reflected surface are associated to specific Delay Doppler temporal histories, aside from possible ambiguities that we discuss). This allows for High Resolution and/or Broad Swath Mapping, that is, the extraction of geophysical information (altimetric and reflectometric) on the glistening surface (the sufficiently "bright" part of the reflecting surface). This type of information is crucial for mesoscale mapping for instance, where a broad swath and/or high resolution are desired.

We thus propose the use both direct and reflected GNSS signals to obtain surface level referred to the GNSS coordinate system (which itself refers to the Earth Centre). This system can provide absolute altimetric and power measurements without the need for complicated set-ups or recalibration. We are also proposing the reception and use of the reflected signal to infer sea surface roughness (which is also related to pollution), which is related to sea state and surface winds and currents.

This is an accurate and precise method, and available on a long term basis thanks to the long life of GNSS. The system is also sensitive to the surface dielectric constant (pollution, salinity). Long-term stability makes this an ideal system for climatic monitoring.

Several approaches are described:

### Straightforward Delay Doppler Mapping Inversion

Each Delay Doppler map contains a significant amount of information from the **"glistening" surface** (the portion of the surface from which there is a significant amount of reflected power, usually defined, in an arbitrary manner, as the "minus 3 dB" zone with respect to the peak power specular zone). An important limitation of this approach is the fact that the Delay Doppler map is not a 1-1 map to the surface, and this gives rise to ambiguity associated inversion issues if high resolution is desired. It is possible, however, to solve with low resolution (determined by the necessary portion of the glistening zone) for wind speed and direction (or, more directly, the directional mean squared slope of the surface). Thus, it is possible to solve for "coarse" surface parameters by model matching of the Delay Doppler zone if resolution is not an issue.

For airborne applications, in particular, it is possible to use the full Delay Doppler maps from each reflection to extract surface parameters, because the glistening zone from low altitudes is rather small and the "global, coarse" information associated to the glistening zone can be used to deliver average surface parameters. This can be done by model fitting with all the available reflections by minimizing a single functional of the relevant parameters (such as the directional mean squared slope or surface dielectric constant). Such a functional can be composed, for example, by sum of terms for each satellite in view and for each time sample, each of such terms measuring Delay Doppler measurement to model error (such as least squares or other estimators adapted to the noise type). Measurements from different sensors in the area can also be combined, as well as measurements from other types of sensors. Such models may be non-linear, but standard techniques to linearize the problem and tracking the parameters (such as Kalman filtering) can be used.

If the surface contains permanent (bright) scatterers, such Delay Doppler

Complex maps give a means for extracting the altimetry of the bright scatterers.

### Multi Map Inversion (MMI)

This technique is a generalization of Straightforward Delay Doppler Mapping Inversion. With this technique, reflectometric measurements are taken combining overlapping Delay Doppler power maps from different times and different transmitter-receiver links, to provide High Resolution Broad Swath Reflectometry (HRBS) products (such as sea state, salinity, pollution). The use of several receiver platforms allows for full breaking of the Delay Doppler Power map ambiguities.

If the surface contains permanent (bright) scatterers, such Delay Doppler Complex maps give a means for extracting the altimetry of the bright scatterers.

### Optimal Delay Doppler Mapping (SHARP)

This technique addresses the problem of resolution (of special importance, but not limited to, spaceborne applications as) and ambiguities in Delay Doppler Mapping, with direct applicability to (but not limited to) spaceborne applications. With this technique (called SHARP, for short), measurements are taken along the reflecting specular track (as limited by the first chip zone width) with high resolution (of the order of the so-called first chip zone size) using a "matched correlation approach". This method uses the fact that each point on the reflecting surface has, as seen from the moving receiver, a specific Delay and Doppler temporal history. More simply, if the emitted signal is S[t], the received signal can be predicted to be S[t-d(t)], where d(t) is a retarded time factor that can be predicted rather accurately if the positions in time and space of the emitter and receiver are known (the specular scatterer being fixed) and the propagation velocity of the signal is known. For instance, in the case of electromagnetic waves in vacuum, the emitter and transmitter four vectors (in the language of relativity theory) must satisfy a light-like condition. Using this information to carry out the cross correlation effectively filters the received power to specific reflecting portions of the surface.

The area near the specular track is approximately mapped to Delay Doppler space is 1-1 fashion. This permits, with reasonable resolution, to maintain a "fixed look" on a fixed patch of the ocean during a rather large stretch of time (typically, several tens of seconds) by appropriate tuning of Delay and Doppler parameters. In essence, these repeated looks are obtained form a specific surface patch from different geometries as the receiver moves. The resulting power vs. look angle power map carries information about the surface characteristics, in particular, roughness (directional means squared slopes).

An advantage of this approach is that a single receiver is sufficient for its implementation to deliver high-resolution surface parameters along each of the reflecting tracks. Low gain antenna implementations are envisioned. This method is rather general and applies to bistatic or monostatic radar.

### Field Noise Approach

The characteristics of the complex field obtained from peak correlation (used, for instance, for altimetry) are tightly related to sea surface characteristics. In particular, the complex field coherence function is related to the significant wave height, while the spectrum bandwidth is related to the mean squared slope. Models, theoretical, semi-empirical or empirical can be used to use exploit this relationship. The use of different frequencies (such as L1, L2 and L5 in GPS), or of their combinations (PIP), allows to sense the surface with different spectral roughness because the field characteristics depend on the relationship of electromagnetic wavelength with respect to surface scales. Again, each visible reflected track provides independent information from different parts of the surface in a quasi-linear fashion (the thickness of the line depending on code chiplength, but typically 3 to 30 km), thus yielding high resolution and samples over a broad swath.

### Holographic Altimetry (HAL)

With this technique, called HAL for short, altimetric measurements are taken combining Delay Doppler maps from different times/observations and from different transmitter-receiver links, to provide High Resolution Broad Swath Altimetry (HRBS) products. The basis of the technique, as in regular holography, is the interferogram formed between the direct and reflected electric fields. By using several receiver platforms to receive the signals from the available emitters at different times, and by combining the direct and reflected signals, a holographic image of the reflecting surface can be obtained, in a manner rather similar as in usual laser holography. The key elements are a coherent source of illumination (e.g., GNSS or other satellites), a focusing system (built, in essence, using SAR-like techniques), and the possibility of combining the direct and reflected signals (e.g., using digital technology) to produce the holographic interferogram. A potentially key element to use this technique from a moving rough surface like the ocean, is the use of the mean electric field (which is a robust quantity), and the use of synthetic signals (from the combination of different fields, such as L1 and L2, PIP), which deliver higher coherence and hence better behaved mean reflected fields.

### Advantages of the invention

The key advantage of this invention is an increased spatial resolution and/or a broad swath are provided using reflected signals from a surface.

Current methods for roughness/reflectometry mapping and for altimetry (code ranging or phase ranging), as described in the mentioned prior art are limited in several ways.

Current methods for surface parameter mapping use simultaneous measurements from the entire "glistening" zone to produce a single estimate of the desired parameters with very poor resolution, since the glistening zone is rather large from space. The proposed techniques (such as SHARP and MMI) can deliver much higher resolution (an order of magnitude or more).

Current altimetry approaches using GNSS-R, on the other hand, can deliver sufficient resolution, but a very narrow swath. The proposed technique, Holographic Altimetry, can provide altimetric measurements over the complete glistening surface (a very large swath).

An important aspect in PARIS altimetry is the potential for absolute calibration, since the up looking antenna will be absolutely geo-referenced. Altimetry will be performed using code and phase GNSS ranging.

Another key aspect is the use of the relative (reflected versus direct) field, which makes the system immune to incident field fluctuations (short or long term).

Another fundamental aspect of this invention is that it will allow measurement of sea state from space with high resolution and a broad swath, that is, it will permit sensing of the ocean spectrum, in particular of significant wave height.

This can also be related to surface winds and surface pollution (oil spills).

Another important aspect is that it will allow measurement of the surface dielectric constant from space with high resolution and a broad swath. In particular it will measure salinity and it will be sensitive to surface pollution. This is partly due to power absolute calibration using the direct signal power as a reference.

A fundamental aspect of this invention with respect to phase ranging and altimetry is that it is based on using the average Interferometric complex electric field to track the PARIS phase. Without this element it would be very difficult to track the Interferometric phase for altimetric purposes under general sea state conditions due to intense fading and phase low coherence. In this invention the average Interferometric field is tracked for altimetric purposes. A Kalman filter approach can be used to track this average field. Tracking the reflected Interferometric field due to changes in mean sea level, and not the individual signal phases, which are not really coherent in the standard sense, is crucial. Indeed, the phase of the reflected signal is very badly behaved (and in fact very sensitive to sea state), while the mean Interferometric field is a slowly varying quantity amenable to efficient tracking systems (e.g., Kalman filtering). Using a a priori solutions (e.g., from tide models or Mean Sea Surface models), the measured field is first "corrected" (counter-rotated). This allows for longer temporal averaging, as the corrected field should be a quasi-stationary random process.

The use of synthetic wavelength from the combination of two frequencies is also an important aspect (PIP), as it will make the system more immune to sea state (good for altimetry) as well as provide another wavelength with which to sense the surface roughness and sea state.

Another key aspect is the analysis of the quasi-instantaneous reflected field time series to infer sea state properties. In particular, the simultaneous view of different satellite reflections in different directions and at different elevation angles will allow directional wave spectrum measurements. These measurements are useful in themselves, but also important to calibrate the Tide Gauge system: sea state can introduce a bias in range measurements if not correctly accounted for. The reflected signal signature is also sensitive to currents and salinity (which affects power) as well as surface pollution (which affects surface roughness and surface dielectric constant). For the purposes of sea state monitoring, it is not essential to absolutely calibrate the system with a dual frequency up looking receiver.

Given the long term stability of the system, and the fact that it exploits both the direct and reflected signal, the system will also be used to map surface dielectric properties (such as sea surface salinity), which are slow changing and have different elevation angle behavior, and can therefore be separated from other effects.

The deployment on other platforms (airborne, spaceborne) platforms is also envisioned.

## Description of at least one way of carrying out the invention by reference to the drawings.

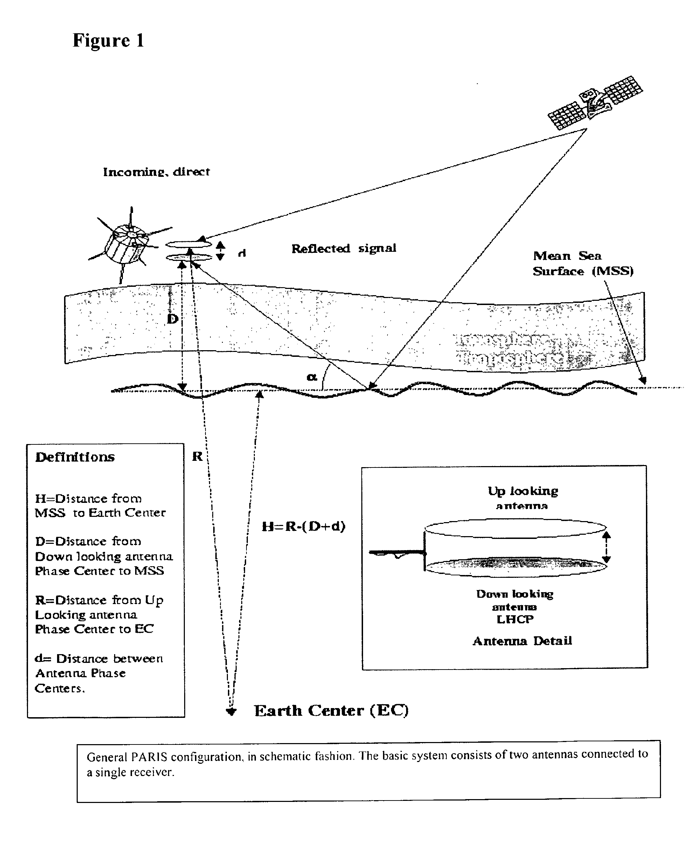

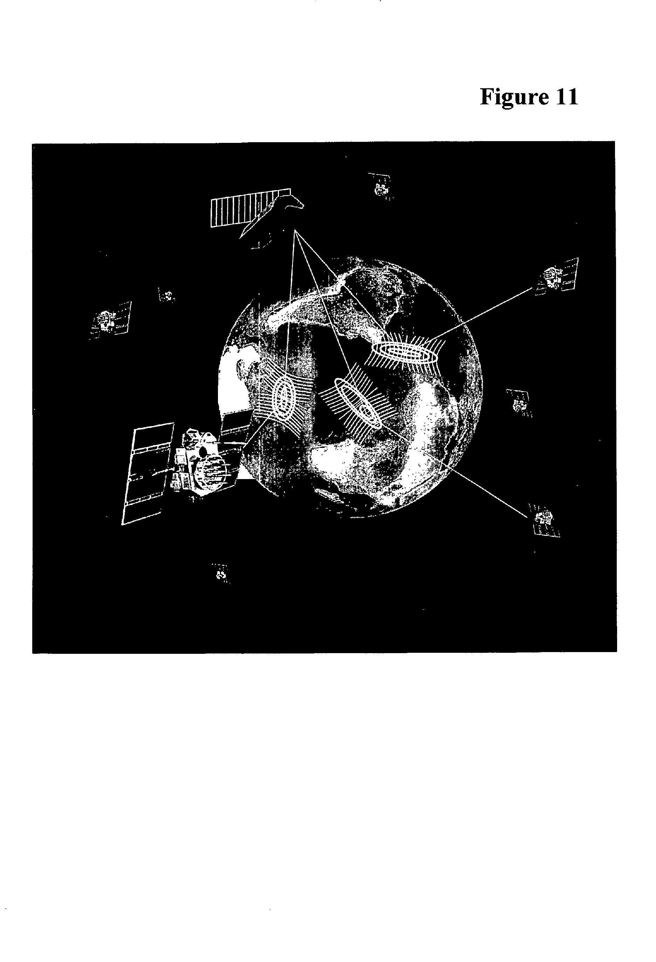

The instrumental configuration may consist of a receiver (airborne or spaceborne) system with one or two "up" looking antennas to gather the direct signal (full polarimetry in the latter case) and one or two down looking antennas (full polarimetry in the latter case) to gather the reflected signal. In figure 1 below a schematic drawing is presented. In figure 11 we have a more artistic rendition of the concept for Earth Observation from a spaceborne platform.

The signals are all sent to a common receiver (which may consist of several front ends), operating from a unique clock for correct synchronization. The data is stored on board. Processing is carried out on board or elsewhere.

We describe below more specific implementations of the different systems and algorithms.

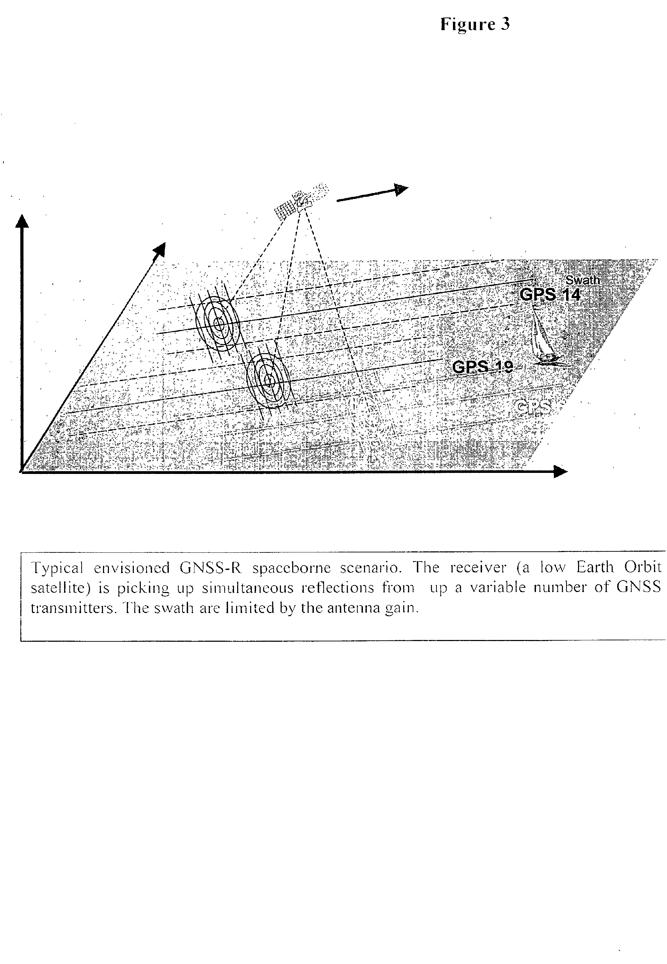

A useful concept is **the specular track** is defined by the following process (figure 3):. given a position for the receiver and the emitter and a reflecting surface, there exists a point of minimal distance, called the specular point. As the receiver and emitter move, this specular point moves, tracing out a so-called specular track. If more than one source of opportunity are in view, several tracks will be "traced" out.

Other concepts used include the Delay Doppler Map and Delay Doppler Cube. **Field Noise approach** Reflected field measurements are obtained from the peak cross-correlation process using direct and reflected signals over the specular tracks (figure 3). The reflected field characteristic noise (field coherence, bandwidth) carries information on the significant wave height and the mean square slope of the reflecting surface. The characteristics of this reflected complex field are tightly related to sea roughness and motion. In particular, the reflected field coherence function is related to the significant wave height (through an inverse exponential relationship), while the spectrum bandwidth is related to the mean square slope. The use of different frequencies (such as L1, L2 and L5 in GPS), or of their combinations (PIP), allows sensing the surface with different spectral roughness.

The process is thus:

1. Process the data by computing peak correlations to record the reflected field history corresponding to the peak power. This is a time series amenable to analysis. In order to do obtain this use the normal way of correlating of an appropriately generated replica with the reflected, down-converted, sampled signal.

2. Use the coherence properties of the field using the different reflections, polarizations, frequencies and different frequency combinations. To first order, this delivers information on significant wave height. Semi-empirical methods can be used. For example, there is a simple rule of thumb that can be used, which states that the coherence time is equal to the ratio of electromagnetic wavelength to surface wind speed. Thus, measurement of the coherence time of the reflected field (or interferometric field) can be used to infer surface wind speeds or other parameters related to the surface spectrum.

3. Study the spectrum of the complex field time series. To first order, the spectrum bandwidth delivers information on mean squared slope. Basically, the wider the spectrum, the larger the mean squared slope of the surface.

4. For overlapping regions the use of simultaneous reflections (there will be about 4 to 8 available) from different directions and elevations will permit directional properties of the surface to be measured. The same applies to **current** measurements, which cause a broadening of the field spectrum and additional Doppler shifts affecting in different manner the different reflections.

**SHArp Reflectometry Profiling (SHARP).** This technique allows one to take measurements along the specular track (the trajectory of the specular point through time, see figure 3) with high resolution (of the order of the so-called first chip zone size, i.e. 20 km if the receiver flies at 500 km). A single receiver is sufficient to operate in this mode.

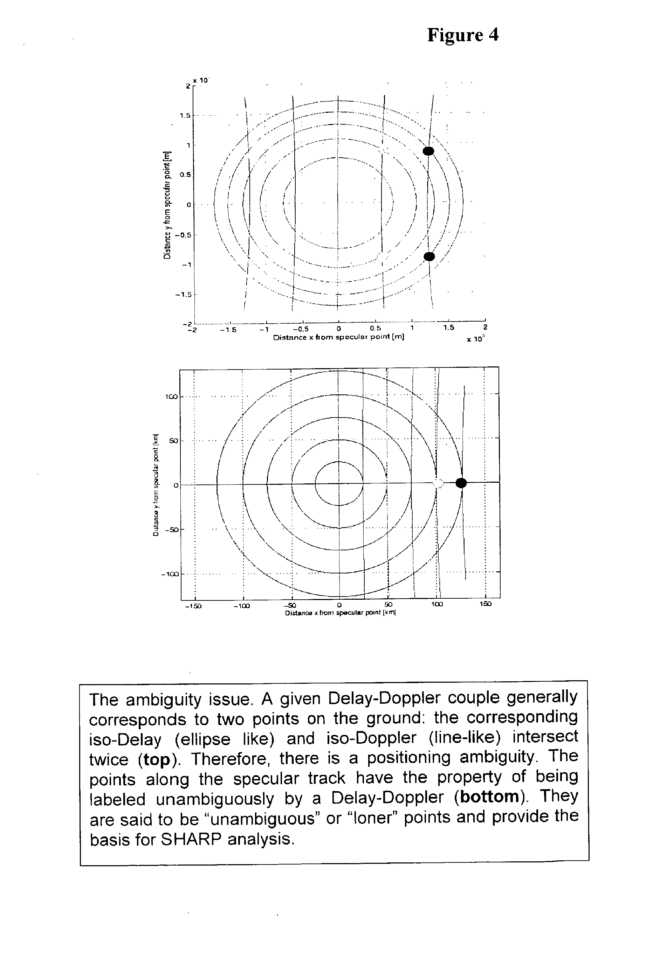

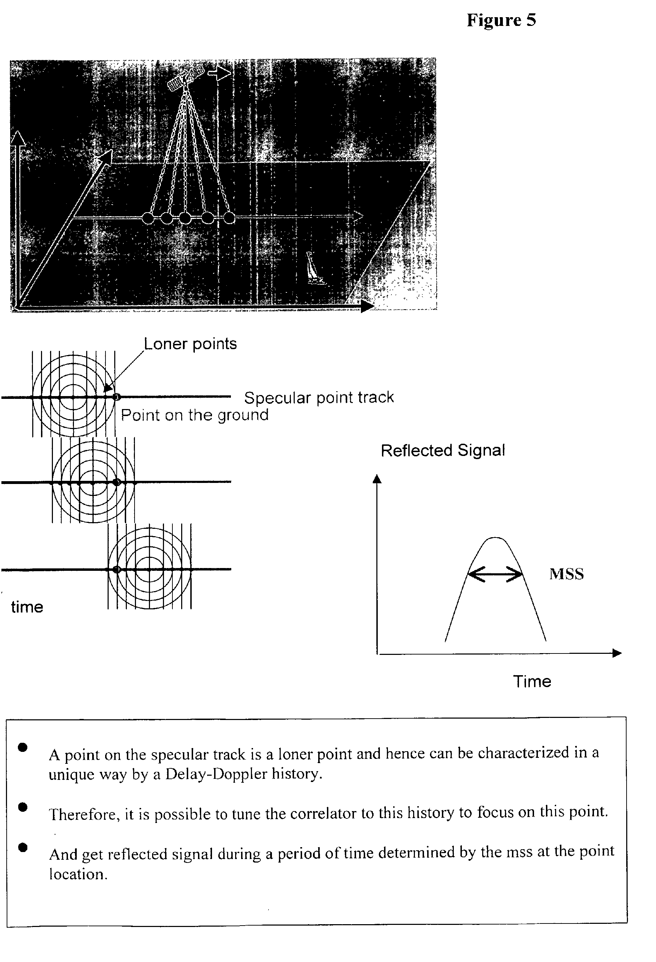

The area near the specular track is approximately mapped to Delay Doppler space in a bijective fashion (see figure 4). This permits, with reasonable resolution, to maintain a "fixed look" on a patch of the ocean along the reflecting track during a rather large stretch of time (typically, several tens of seconds) by appropriate tuning of Delay and Doppler parameters. In essence, these repeated looks are carried out from different geometries as the receiver moves. The resulting power vs. look angle power map carries information about the surface roughness (see figure 5). The process is thus

1. From time series of reflected signal, build a Delay-Doppler-Time Cube. This 3D function represents the reflected field power vs time, and Delay-Doppler with reference to the specular point. This step is achieved using standard GNSS correlations techniques.
2. Determine the specular track, that is the trajectory of the specular point through time.
3. For each point of the specular track:

- determine its Delay-Doppler history
- from this history and the Delay-Doppler-Time cube, deduce a reflected Power vs time function

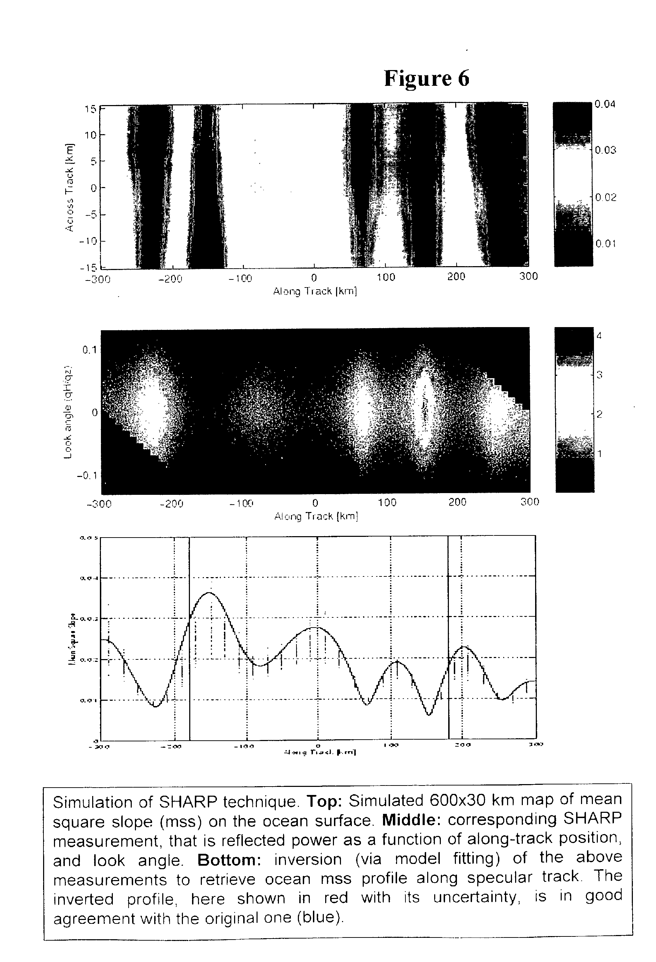

This step thus yield a 2D function: reflected Power vs time and position along specular track (see figure 6).
4. Invert the 2D function to retrieve a profile of ocean parameter along specular track. This is done using classical fitting techniques to any physical model used to infer the ocean parameter of interest.

Various geophysical information can be extracted using this technique (wind speed and direction, sea-state, salinity, surface-pollution, ...). As an example, we here provide the physical model we have implemented to retrieve a sea-roughness parameter: the variance of the slopes, namely the *mean square slope* (mss).

Forward scattered signals in L-band (GPS frequency) are mostly sensitive to the quasi-specular scattering mechanism. GNSS-R data can then be modeled using the geometric optics limit of the Kirchoff approximation. Then the classical bistatic radar equation relates the measured power to ocean slope probability density function (pdf). For a given Delay-Doppler cell (tau,f), the power return is given by:

$$P(\tau, f) = \int d.A. \; \frac{G_t G_r}{R_t^2 R_r^2} \cdot \sigma^0 \cdot |\chi|^2,$$

Where G_t and G_r are the transmitter and receiver antenna patterns, R_t and R_r are the distances from generic point to transmitter and receiver, sigma0 is the reflectivity, (proportional -to first order- to the slope pdf) and chi is the so-called Woodward Ambiguity Function (WAF). This integral is evaluated over the entire footprint. If the slope pdf is assumed Gaussian, then the reflectivity writes:

$$\sigma 0(\text{mss. } \beta) = \frac{(1 + \tan^2 \beta)^2}{2 \, \text{mss}} e^{-\frac{\tan^2 \beta}{2 \, \text{mss}}}.$$

where beta represents a measure of the look angle. The sea-roughness is characterized by the mss, the surface mean square slope.

These equations can be used to model and invert the data as described above. Other models and approaches are possible.

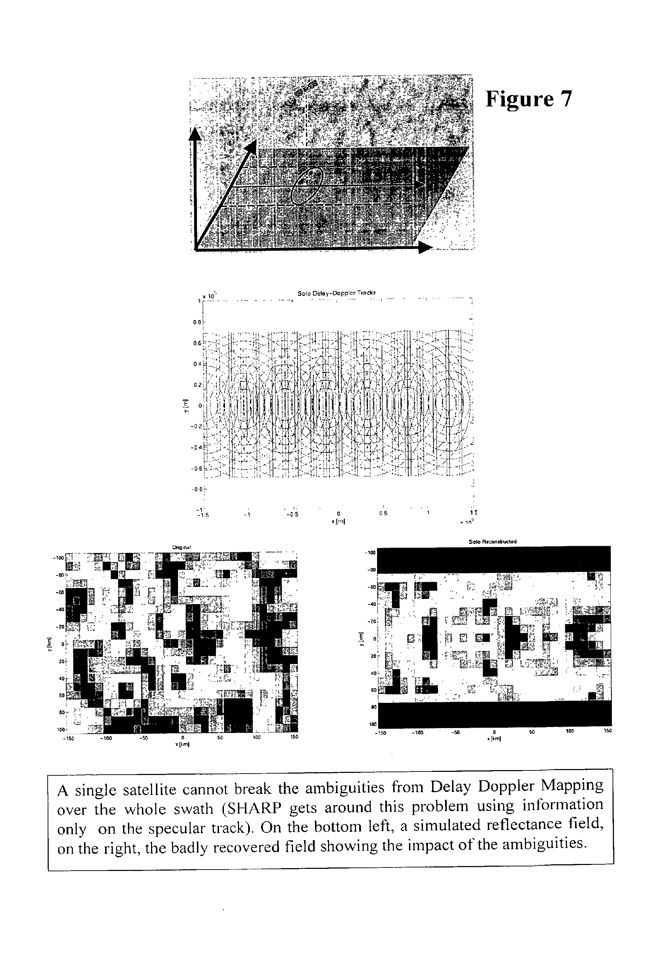

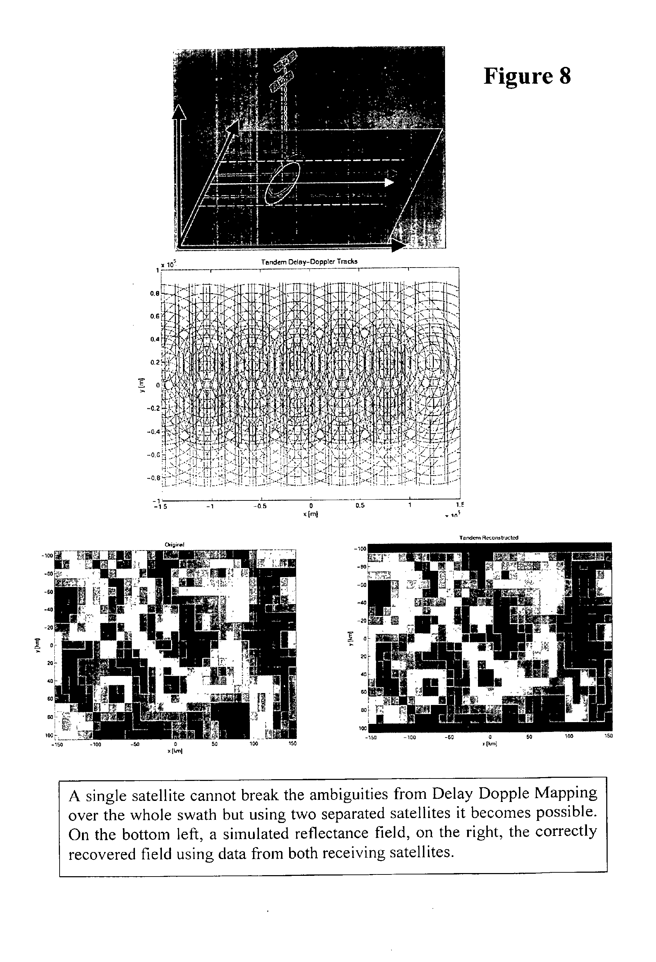

**Multi Map Inversion (MMI).** With this technique, reflectometric measurements are taken combining Delay Doppler power maps from different times, from different transmitter-receiver links and/or polarizations to provide High Resolution Broad Swath Reflectometry (HRBS) products (such as sea state, salinity, pollution). The use of several receiver platforms allows for breaking of the Delay Doppler Power map ambiguities (see figures 3, 7, 8).

This technique requires formation flying of at least two receivers. The geometry of the formation is not crucial. It can be side by side or in tandem (one after the other, exploiting the Earth's rotation to displace across-track the Delay Doppler maps on the ground).

It is important that the receivers be spaced across track with distances similar to the first chip zone. This allows for more efficient ambiguity breaking.

The process is:

1. Each receiver computes a Delay-Doppler-Time cube for a defined set of times.
2. The Power information of each Delay Doppler map is used to resolve the ambiguities on the ground and produce directional mean square slope maps through model-data minimization.

A simple way to proceed is to construct a pixel representation for the surface directional mean square slope parameters (other representations, e.g., spherical harmonics, are also possible). The data from the Delay Doppler maps from the different satellites and from different times/samples is used to define a minimization process, through the use of a model. The model, which can be based on Geometric Optics and a Gaussian Probability Distribution function for the directional mean squared slopes, will typically be non-linear. However, standard linearization methods based on a priori solutions and Kalman filtering for temporal averaging can be used.

Mathematically, what happens can be understood in terms of loner points. The loner points on each of the Delay Doppler maps break the ambiguity for the other superimposed Delay Doppler map. The overall process is similar to the "domino effect".

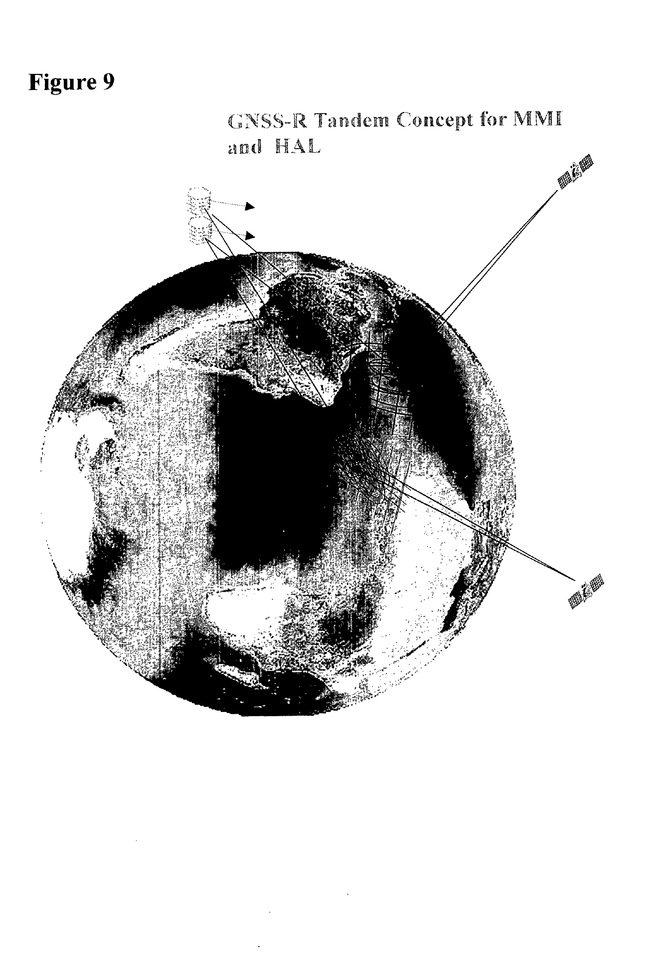

This process can be applied to each source of opportunity in view (Figure 9). **Holographic Altimetry (HAL).** With this technique, called HAL for short, altimetric measurements are obtained combining Delay Doppler maps from different times/observations and from different transmitter-receiver links, to provide High Resolution Broad Swath Altimetry (HRBS) products. The basis of the technique, as in regular laser holography, is the interferogram formed by combination of the direct and reflected electric fields. By using several receiver platforms to receive the signals from the available emitters at different times, and by combining the direct and reflected signals, a holographic image of the reflecting surface can be obtained, in a manner rather similar to usual laser holography.

The key elements in a holographic system are a coherent source of illumination (GNSS satellites such as those of GPS are coherent sources of illumination in L band), a focusing system (bi-static SAR-based techniques), and the possibility of combining the direct and reflected signals to produce the interferogram.

A moving surface will also have an impact on the phase of the reflected signal. This implies that currents can also be measured with this method. The Doppler centroid of a portion of the surface as pointed using real or synthetic aperture methods, will be located at different Doppler values as seen from different observation locations, thus providing the means to infer the current vector.

As coherence of the reflected signal is fundamental, another key element to use this technique from a moving rough surface like the ocean, is the use of the mean electric field, and the use of synthetic signals (from the combination of different fields, such as L1 and L2, PIP), which deliver higher coherence and hence better behaved mean reflected fields.

A basic component of a holographic system is the "lens". That is, it is necessary to create a "lens" in space to focus on different directions and thus obtain an electric field measurement for interference with the direct signal (holography).

A lens is a system which can select radiation originating from different sources in the illuminated region using delay information: signals originating from a point in space-time will arrive at different points in space at very specific times (determined by the speed of light).

Aperture synthesis is a standard element in GNSS Reflections, although people usually refer to it by the name of "Doppler filtering". As the moving receiver antenna moves in space, it gathers electromagnetic radiation at different places and times. Since the temporal behavior of the signal is well known, it can be corrected by "counter-rotation". Mathematically, this means that the signal is multiplied by a phasor of the right frequency to cancel the natural carrier after reflection and down conversion. What is left is the "frozen" field at different points in space, which is just summed, as it happens with an optical lens, to focus on the ground location. Using different counter-rotation frequencies is used to point this synthetic lens into different parts of the surface. This is the process called Doppler mapping or filtering.

Lensing can also be achieved thorough the deployment of a large antenna in space, of course.

For the purposes of mesoscale altimetry using phase ranging, it would be desirable to be able to provide an antenna footprint of the order of 25 km. This implies a rather large antenna, of the order of 10 m on each side.

For the purposes of mesoscale altimetry using code ranging, it would be desirable to be able to provide an antenna footprint of the order of 25 km. This implies a very large antenna, of the order of a few km, depending on the code chip-length used. This cannot be synthesized without the use of formation flying concepts. To understand this it suffices to realize that there is no conceptual difference between the code and the phase. Both are time varying signals on the electromagnetic field, with characteristic scales. The code has a much larger characteristic scale.

For phase altimetry, the minimal necessary configuration consists of at least two receiver systems separated by a distance of the order of 10 or more meters. This can be achieved through the use of a large boom to host the antennas, or by formation flying concepts using 2 or more satellites. It is important that the separation be achieved across track, as the along track direction is synthesized through the along track motion of the satellites.

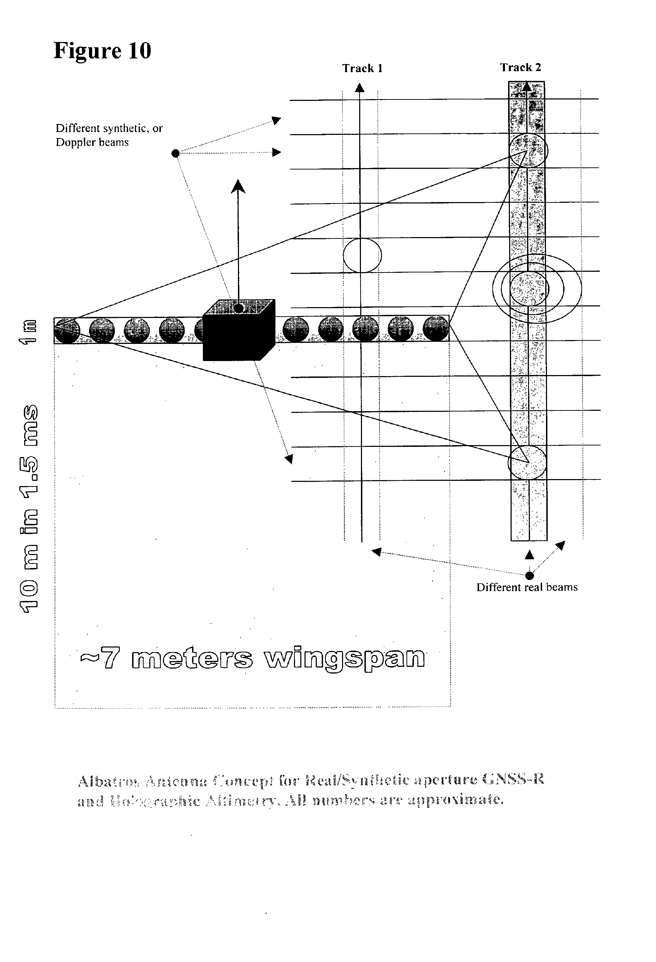

A particular solution for phase altimetry is the "Albatros" Antenna (see figure 10 below). This system is a real aperture antenna in one direction, and a synthetic aperture in the along-track direction. The antenna is pointed in different directions through appropriate selection of Doppler and relative delay between the antenna elements (i.e., a phase array).

In either case, it is important to have precise positioning information of the antennas (relative positioning better than a few percent of lambda) as well as precise timing information, which can be provided by standard precise GNSS techniques. In the case of a single satellite, things can be simplified using a receiver concept.

To describe how out a HAL map we will focus on a given portion of the surface. The complete process can be carried out in similar fashion, repeating the procedure patch by patch.

A simple approach consists of using electronic beam steering techniques to focus the system along the set of points matching the requested delays. The signals from the different receivers are simply summed over in an appropriate fashion, with the desired delays, as in any phase array. This approach will work if it possible to establish high rate data links from the different antenna elements and the receiver/processor. The data rates are pretty high, but current and planned technologies can handle them. This approach is especially indicated in a system in which the antenna elements are all on a single spacecraft.

In a formation flying configurations, it is also possible to pre-process the data on each receiver, using the principle that it is the same to sum the signals with different delays and the cross-correlate with a clean replica to find the peak and hence the delay, or cross-correlate with the appropriate delays and then sum the resulting complex correlations for complex analysis. Two or more spaceborne receivers are needed to provide broad swath altimetry (holography). Let us be a bit more specific. A possible procedure would be:

1. First a region of interest is defined. The position of the region of interest defines the *relative* delays for cross-correlations at each receiver. The Doppler can be fixed using a fixed sea model or searched for increased SNR and current detection. That is, the signal at each receiver *i* is multiplied by a replica $R(t-tau-delta_i)$, where the delays $delta_i$ are chosen to "point" the system.
2. Then a total delay parameter tau is searched by maximizing the complex cross correlations sum for all i.
3. The complex field thus obtained can also be used for phase ranging, in the usual fashion to obtain samples of the electric field from the region of interest at specific time intervals.

Of special interest is the relative phase obtained in this scanning fashion, as they provide measurements for relative mesoscale altimetry.

More generally, if more than two receivers are used the relative delays for the correlations at the different receivers can be fixed to define a direction in space (i.e., to point the system). Then an overall Delay and Doppler must be searched for to locate the correlation peak, although an a priori model of the surface can be used to estimate rather accurately the expected Doppler corresponding to the area under study. The overall delay can be used to estimate the height of the surface using an priori model.

The phase of the found correlation peak can also be used for more precise altimetry application. In such a case, the use of the average mean complex field provides a robust quantity for altimetry. Multi-frequency methods can provide a more robust measurement also, by providing longer synthetic wavelength.

Fine-tuning of the Doppler can provide information on the velocity of the surface projected to the emitter and receiver directions, to provide information on currents.

**In the following, we summarize some important aspects of the present invention:**

A characterizing element of this invention is that it focuses on making maximal use of the information in Delay Doppler complex maps as obtained from the cross-correlation process of the received signals with generated replicas, e.g., in GNSS Reflections.

The focus of this invention is on using said maps and information to provide higher resolutions and a larger swath for reflectometric and altimetric for Reflections (Galileo and GPS or other reflections).

The Field noise approach to characterize significant wave height and mean square slopes is innovative.

The use of Delay Doppler mapping to provide SHARP profiles of mss is innovative.

Multi Map inversion for large swath high-resolution reflectometric applications is innovative.

Holographic Altimetry is innovative. Current detection as explained is also innovative.

Applications for altimetric, mss, pollution and salinity mapping are innovative.

The use of the average interferometric <u>field</u> (not phase) is innovative. This is a very robust method, especially if an a priori altimetric model is available (e. g., for tides) to "correct" (counter rotate) the interferometric field measurements and thus allow for longer temporal averaging. This technique can mitigate the loss of coherence of the reflected field.

The instantaneous interferometric field is also analysed for Doppler width, amplitude and phase temporal statistics, to infer sea state, currents and dielectric constants. Oil spills or other pollution severely affect surface roughness and dielectric properties. These signatures, available at different elevation angles, frequencies, directions, polarizations (if two down-looking antennas are used) and over long time scales, are used for geophysical inversion of these parameters (using either models, empirical or semi-empirical approaches).

The measurements thus obtained are absolute, and of great value for operational and climatic applications. This is because the measurements are based on the relative field (reflected versus direct).

Salinity applications are also innovative.

**Important aspects of the present invention, as described above and with regard to the figures, can be summarized as follows:**

Several methods to increase the resolution and swath for GNSS or other reflections are proposed, with applications to altimetry (using both code and phase), directional mean square slope mapping, dielectric constant mapping, in particular, with applications for salinity, pollution and current mapping.

GNSS-Reflections is an example of a bistatic radar concept using direct and reflected signals (from sources such as GNSS, like GPS and Galileo) using both carrier and code pseudo-ranges from air or spaceborne sensors to infer the sea, lake or coastal sea level as well as the sea state and currents and salinity from a receiving system on an air or space platforms. The system can act as an Absolute Tide, Sea State, Current, Pollution, Salinity Remote Sensing System from air and space with very good resolution and swath.

Both direct and reflected GNSS signals are used to obtain water level referred to the GNSS coordinate system (which itself refers to the Earth Center). This system can provide absolute altimetric and power measurements without the need for complicated set-ups or recalibration. We are also proposing the reception and use of the reflected signal to infer directional sea surface roughness (which is also related to pollution) and directional sea surface motion (both orbital velocities as well as horizontal), which is related to sea state and surface winds and currents. Salinity and Pollution information can also be extracted from the absolute power measurement capability from different reflection at different elevation angles and directions and over long time scales.

This is an accurate and precise method, and available on a long term basis thanks to the long life of GNSS. Long term stability and compatibility with ground, airborne and spaceborne missions using this concept make this an ideal system for climatic monitoring.

**Claims**

1. A system for monitoring at least one feature of a surface combining Delay Doppler Complex maps obtained from a Global Navigation Satellite System component (e.g. GNSS like Galileo, GPS, Glonass and Augmentation systems, including ground pseudo-lites, or future Earth-bound or planet/space-bound navigation/positioning/communication systems) or an other satellite system indirectly from one or more receivers and/or multiple emitters and/or several observations and/or frequencies and/or polarizations and means for deriving from said reflected signals said feature to be monitored.

2. A system as in claim 1 using a single receiver and combining said Delay Doppler complex maps from different emitters and/or times and/or frequencies and/or polarizations to deliver products over the surface, such a directional mean square slopes or the dielectric constant.

3. A system as in claim 1 using more than one airborne or spaceborne receivers and combining said Delay Doppler complex maps from the different emitters and/or receivers and/or times and/or frequencies and/or polarizations to deliver high resolution broad swath products over the surface.

4. A system as in claim 1 using a receiver or receivers equipped with a high gain steerable antenna and combining said Delay Doppler complex maps from the different emitters and/or receivers and/or times and/or frequencies and/or polarizations to deliver high resolution broad swath products over the surface.

5. A system as in one of the previous claims to measure directional mean square slopes on the surface with high resolution and a broad swath.

6. A system as in one of the previous claims to measure the dielectric constant (including salinity) with high resolution and a broad swath.

7. A system as in one of the previous claims to measure Mean Surface Level (altimetry) with high resolution and a broad swath.

8. A system as in one of the previous claims to measure surface motion, such as currents in the case of water bodies.

9. A system as in one of the previous claims for using a single receiver to deliver high resolution characterizing parameters along each of the visible reflection tracks.

10. A method as in as in one of the previous claims for using the field fluctuations as measured by the peak correlation power to infer sea roughness.

11. A method as in one of the previous claims to measure altimetric properties over multiple permanent bright scatterers.

# Figure 1

Incoming, direct

Reflected signal

Mean Sea
Surface (MSS)

$H=R-(D+d)$

**Definitions**

H=Distance from
MSS to Earth Center

D=Distance from
Down looking antenna
Phase Center to MSS

R=Distance from Up
Looking antenna
Phase Center to EC

d= Distance between
Antenna Phase
Centers.

Up looking
antenna

Down looking
antenna
LHCP

**Antenna Detail**

**Earth Center (EC)**

General PARIS configuration, in schematic fashion. The basic system consists of two antennas connected to
a single receiver.

**Figure 2**

Concept of Delay-Doppler Mapping. **Top:** Map of the ocean reflectivity (sigma0) on the sea surface for a given bistatic geometry. The iso-Delays (ellipse like) and iso-Dopplers (line like) are super-imposed. **Bottom:** corresponding measurements in a Delay-Doppler Map. The color represents the power measured in each Delay-Doppler cell in the above figure.

**Figure 3**

Typical envisioned GNSS-R spaceborne scenario. The receiver (a low Earth Orbit satellite) is picking up simultaneous reflections from up a variable number of GNSS transmitters. The swath are limited by the antenna gain.

**Figure 4**

The ambiguity issue. A given Delay-Doppler couple generally corresponds to two points on the ground: the corresponding iso-Delay (ellipse like) and iso-Doppler (line-like) intersect twice (**top**). Therefore, there is a positioning ambiguity. The points along the specular track have the property of being labeled unambiguously by a Delay-Doppler (**bottom**). They are said to be "unambiguous" or "loner" points and provide the basis for SHARP analysis.

**Figure 5**

Loner points

Specular point track

Point on the ground

time

Reflected Signal

MSS

Time

- A point on the specular track is a loner point and hence can be characterized in a unique way by a Delay-Doppler history.

- Therefore, it is possible to tune the correlator to this history to focus on this point.

- And get reflected signal during a period of time determined by the mss at the point location.

# Figure 6

Simulation of SHARP technique. **Top:** Simulated 600x30 km map of mean square slope (mss) on the ocean surface. **Middle:** corresponding SHARP measurement, that is reflected power as a function of along-track position, and look angle. **Bottom:** inversion (via model fitting) of the above measurements to retrieve ocean mss profile along specular track. The inverted profile, here shown in red with its uncertainty, is in good agreement with the original one (blue).

**Figure 7**

A single satellite cannot break the ambiguities from Delay Doppler Mapping over the whole swath (SHARP gets around this problem using information only on the specular track). On the bottom left, a simulated reflectance field, on the right, the badly recovered field showing the impact of the ambiguities.

**Figure 8**

A single satellite cannot break the ambiguities from Delay Dopple Mapping over the whole swath but using two separated satellites it becomes possible. On the bottom left, a simulated reflectance field, on the right, the correctly recovered field using data from both receiving satellites.

# Figure 9

GNSS-R Tandem Concept for MMI and HAL

## Figure 10

Albatros Antenna Concept for Real/Synthetic aperture GNSS-R
and Holographic Altimetry. All numbers are approximate.

**Figure 11**